# EUROPÄISCHE PATENTSCHRIFT

(11) **EP 1 148 606 B1**
(45) Veröffentlichungstag und Bekanntmachung des Hinweises auf die Patenterteilung: **01.01.2014**
(21) Anmeldenummer: 00101804.3
(22) Anmeldetag: 28.01.2000
(51) Int. Cl.: H02H 3/24, H02H 6/00, H02H 7/085, G05B 19/4067

(54) **Verfahren zur Detektierung des Informationsverlustes eines Mikroprozessors**
Method to detect lost information in a microprocessor
Procédé pour détecter de l'information perdu dans un microprocesseur

(43) Veröffentlichungstag der Anmeldung: 24.10.2001
(73) Patentinhaber: Continental Automotive GmbH, 30165 Hannover (DE)
(72) Erfinder: Fuchs, Gerhard, 3423 St. Andrae Woerdem (AT)

(56) Entgegenhaltungen:
- EP-A- 0 966 085
- DE-C- 4 409 286
- DE-U- 29 514 786
- US-A- 4 412 284
- PATENT ABSTRACTS OF JAPAN vol. 008, no. 249 (M-338), 15. November 1984 (1984-11-15) & JP 59 124545 A (NISSAN JIDOSHA KK), 18. Juli 1984 (1984-07-18)

## Beschreibung

Die Erfindung bezieht sich auf ein Verfahren zur Detektierung des Informationsverlustes eines Mikroprozessors gemäß Patentanspruch 1; die Anwendung eines solchen Verfahrens eignet sich insbesondere für z.B. aus der EP 0 751 274 A1 bekannte fremdkraftbetätigte Fensterheber- bzw. Schiebedachantriebe in Kraftfahrzeugen. Diese weisen einen Elektromotor und eine Steuervorrichtung auf, wobei drehzahlproportionale Pulse des Motors vom Mikroprozessor erfasst und hieraus positionsbestimmende Daten berechnet werden.

Die Einklemmschutz-Vorschriften für derartige fremdkraftbetätigte Stellantriebe schreiben in Abhängigkeit von der jeweiligen Hubwegposition unterschiedliche Schließkraftbegrenzungen vor; dazu ist es notwendig, jeweils die genaue Stellposition definieren zu können. Die jeweilige Stellposition wird ausgehend von in einem Initialisierungsvorgang mit für die volle Öffnungs- bzw. Schließstellung festgelegtem Bezugspunkt durch Addition der von einem Inkrementalgeber, insbesondere von einem mit der Welle des das Stellteil antreibenden Motors gekoppelten Geber, abgegebenen Pulse ermittelt.

Gemäß Aufgabe vorliegender Erfindung soll auch bei kurzzeitigem Einbruch bzw. Ausfall der Versorgungsspannung oder einer anderen Störung, die ein Reset des Mikroprozessors hervorruft eine Detektierung der während des Resets nicht unmittelbar weiter erfassbaren Daten mit geringem schaltungstechnischen Aufwand gewährleistet werden können; derartige Resets können z.B. durch Spannungsunterbrechungen bei Kurzschluß eines in einem Nachbarstromkreis liegenden Verbrauchers bis zum Abschalten durch dessen Sicherung hervorgerufen werden.

Die Lösung dieser Aufgabe gelingt durch ein Verfahren gemäß Patentanspruch 1; vorteilhafte Ausgestaltungen der Erfindung sind jeweils Gegenstand der Unteransprüche.

Das erfindungsgemäße Verfahren ermöglicht bei einem Reset z.B. durch Spannungsausfall und damit vorübergehend nicht möglichem Zählen von positionsbestimmenden Pulsen durch den Mikroprozessor, die zwischenzeitlich nicht registrierbaren Pulse aufgrund der erfassten Reset-Dauer zu berechnen und durch Ergänzen der errechneten zu den vor dem Reset gezählten Impulse sowie gegebenenfalls der Berücksichtigung des momentanen Zustandes der Positionsgeber die tatsächliche Stellposition durch Nachberechnung zu bestimmen und somit Stellpositionsdaten zu aktualisieren.

Steuert der Mikroprozessor einen Elektromotor-Antrieb, ist von einer Drehzahlminderung bzw. einem Auslaufen des Motors während der Reset-Zeit auszugehen. In diesem Fall werden bei der korrigierten Stellpositions-Erkennung nach einer Ausgestaltung der Erfindung außer der eigentlichen Reset-Zeit zumindest noch die Stellgeschwindigkeit bei Beginn des Resets und gegebenenfalls zur Genauigkeitserhöhung der Detektierung bzw. Korrektur weitere Einflußgrößen, wie z.B. die Umgebungstemperatur oder der aktuelle Zustand der Hallsensoren nach dem Reset, berücksichtigt.

Die Ausfallzeit wird in schaltungstechnisch besonders einfacher Weise aus dem Spannungsabfall am Kondensator eines RC-Gliedes bestimmt, das bei vorhandener Versorgungsspannung mit einer konstanten Ladespannung geladen wird, die sich dann während der Reset-Zeit und fehlender Ladespannung mit definierter Zeitkonstante entlädt.

Die Verwendung eines RC-Gliedes ist bei einem durch einen Mikroprozessor gesteuerten System durch die DE 44 09 286 C1 an sich bekannt; in diesem bekannten Fall wird zur Erkennung der Ursache eines Reset-Vorganges bei vorhandener Versorgungsspannung der Kondensator der RC-Schaltung geladen, welcher sich bei fehlender externer Versorgungsspannung mit einer vorbestimmten Entladezeitkonstanten entlädt, die länger als die Dauer eines Kurzzeit-Resets ist. Der Kondensator liegt an einem Port des Mikroprozessors, welcher zumindest unmittelbar nach einem Reset als Eingangsport geschaltet ist, so dass aus dem Vorhandensein einer Spannung an dem Port unmittelbar nach einem Reset-Zustand vom Mikroprozessor erkennbar ist, ob ein Kurzzeit-Reset oder ein Langzeit-Reset vorlag.

Aus der JP 59124545 A ist es bereits bekannt, nach einem Spannungsausfall die aktuellen Positionsdaten eines beweglichen Teils einer Maschine zu ermitteln, indem aus gepufferten Speichern der Maschine Positions-, Richtungs- und Geschwindigkeitsdaten des bewegten Teils vor dem Spannungsausfall ausgelesen werden und indem in einem Rechner unter Verwendung der genannten Daten und einer die Trägheit des beweglichen Teils beschreibenden Zeitkonstante die aktuellen Positionsdaten des beweglichen Teils berechnet werden.

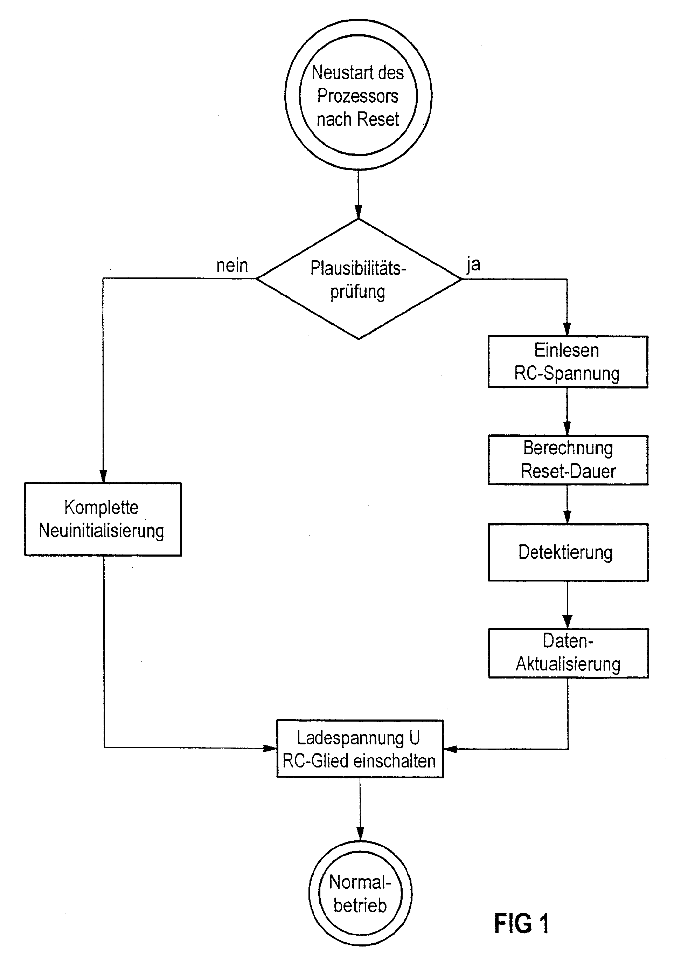

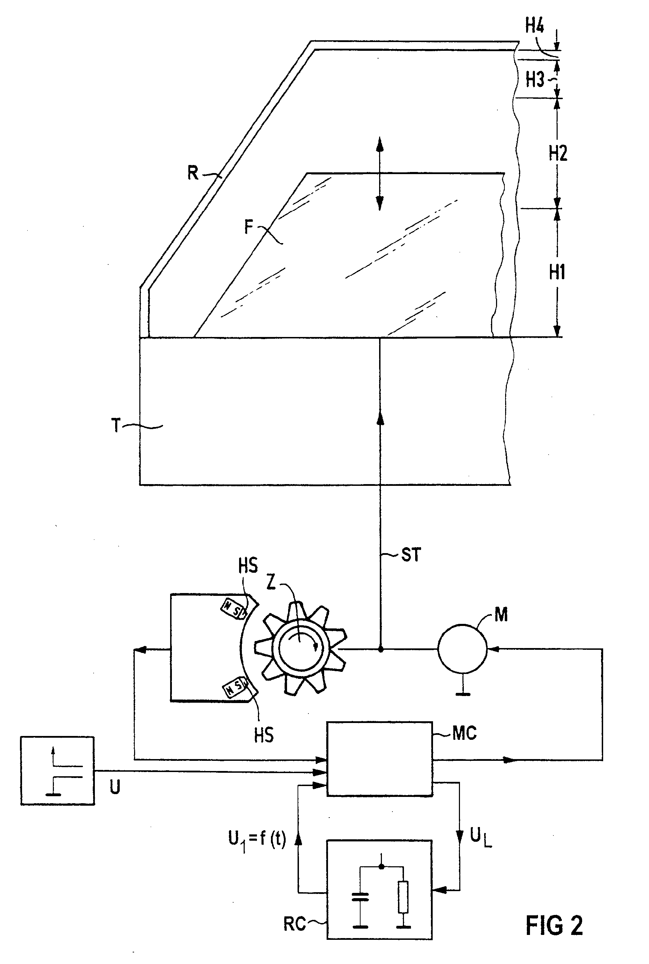

Die Erfindung sowie weitere vorteilhafte Ausgestaltungen der Erfindung gemäß Merkmalen der Unteransprüche werden im folgenden anhand eines schematisch dargestellten Ausführungsbeispiels gemäß FIG 2 bzw. eines beispielhaften Funktionsablaufs gemäß FIG 1 näher erläutert.

FIG 2 zeigt einen fremdkraftbetätigten Stellantrieb ST für eine Fensterscheibe F in einer Kraftfahrzeug-Tür T; der Hubweg der Fensterscheibe F zwischen ihrer unteren vollen Öffnungsstellung und ihrer oberen zum Fensterrahmen R vollen Schließstellung ist in vier Hub-Bereiche mit unterschiedlichen Hubwegen H1-H4 eingeteilt, für die unterschiedliche Schließkraftbegrenzungen und dementsprechend - in an sich bekannter Weise - unterschiedlich hohe Schließgeschwindigkeiten zulässig sind.

Zum Antrieb des Stellantriebes ST dient ein Elektromotor M, insbesondere Kommutatormotor, der aus einer Versorgungsspannung U über einen Mikroprozessor MC, ansteuerbar ist. Die je weils augenblicklichen Positionsstellungen bzw. Stellgeschwindigkeiten werden im Normalbetrieb von dem Mikroprozessor MC aufgrund der Pulsdaten eines Inkrementalgebers Z;HS mit einem rotorseitigen drehzahlproportionalen Geberrad Z und zugeordneten statorseitigen Hall-Sensoren HS;HS berechnet.

Zur erfindungsgemäßen Detektierung der Positionsbestimmung des Stellantriebes und damit der Hubwege der Fensterscheibe F ist ein RC-Glied RC an einen Ausgangsport des Mikroprozessors MC angeschlossen und derart an eine, z.B. der Versorgungsspannung U entsprechende, Ladespannung U_{L} angelegt; der Kondensator C des RC-Gliedes RC lädt sich somit im Normalbetrieb auf die Ladespannung U_{L} auf.

Bei Ausfall bzw. Unterbrechung oder Einbruch der Versorgungsspannung U und eines daraus folgenden Resets des Mikroprozessors MC bleiben die in dem Mikroprozessor MC zuvor erfassten bzw. abgelegten Daten aufgrund seiner Speicherfähigkeit für eine bestimmte Zeit erhalten. Ausgehend von diesen Daten wird dann erfindungsgemäß aufgrund der festgestellten Ausfall- bzw. Resetzeit die Korrektur bzw. Aktualisierung der Positionsbestimmung vorgenommen.

Die Reset-Zeit wird in besonders einfacher Weise aus dem Verlauf der über einem Eingangsport des Mikroprozessors MC erfassbaren Entladespannung U₁ = f(t) des sich über den Widerstand R mit definierter Entladezeitkonstante entladenden Kondensators C des RC-Gliedes RC berechnet. Die Entladezeitkonstante des RC-Gliedes ist derart definiert, dass sie Null oder einen entsprechenden Grenzwert erreicht bevor die bei Beginn des Spannungs-Resets vom Mikroprozessor MC erfassten und abgespeicherten Daten aus seinem flüchtigen Speicher verloren gehen.

FIG 1 zeigt den Funktionsablauf einer erfindungsgemäßen Stellwert-Korrektur. Bei einem Neustart des Mikroprozessors MC nach einem vorhergehenden kurzzeitigen Spannungseinbruch wird in einer Plausibilitätsprüfung abgefragt, ob die vorherigen Daten noch gespeichert sind oder ob eine totale, von einem Null-Bezugspunkt, z.B. der unteren Öffnungsstellung oder der oberen Schließstellung, ausgehende komplette Neuinitialisierung notwendig ist.

Im Fall eines Vorliegens noch sämtlicher positionsbestimmenden, unmittelbar vor Beginn des Resets erfassten Daten wird die Entladespannung U₁ = f(t) des RC-Gliedes RC in den Mikroprozessor MC eingelesen und die Zeitdauer des Resets erfasst. Aufgrund der derart festgestellten Reset-Zeit kann dann eine Aktualisierung im Sinne einer Positionskorrektur lediglich für die Reset-Zeit erfolgen und durch entsprechende Aktivierung des Ausgangsports des Mikroprozessors MC für den weiteren Normalbetrieb das RC-Glied RC für eine erneute Aufladung des Kondensators C an die Ladespannung U_{L} angeschlossen werden.

Ist von keinem fremdkraftbetätigten Stellantrieb des Stellantriebes während der Ausfallzeit der Versorgungsspannung auszugehen, sondern ist dieser Stellantrieb ebenfalls entweder von der Versorgungsspannung U oder von der Ansteuerung durch den Mikroprozessors MC abhängig und somit auslaufbehaftet, so werden entsprechende, z.B. durch die Massenträgheit des bewegten Stellteils und die zuletzt gemessene und vom Mikroprozessor erfasste Stellteil-Geschwindigkeitswerte, Parameter als externe Ereignisse in die Korrektur-Berechnung einbezogen.

Zur Detektierung eines Informationsverlustes bei einem Reset eines Mikroprozessors MC ohne Notwendigkeit einer totalen Neu-Initialisierung des Mikroprozessors wird eine entsprechende Korrekturgröße durch Auswertung der Reset-Zeit und von dem Reset erfasster Informationsdaten nachberechnet; die Reset-Zeit wird in vorteilhafter Weise mit Hilfe der Entladespannung U₁ = f(t) eines zuvor aus einer Ladespannung U_{L} gespeisten RC-Gliedes RC bestimmt.

## Patentansprüche

1. Verfahren zur Detektierung des Informationsverlustes eines Mikroprozessors während eines Resets bei einem durch den Mikroprozessor gesteuerten, eine Stellpositions-Detektierung und einen Elektromotor (M) aufweisenden Stellantrieb (ST) eines Kraftfahrzeugs, bei welchem drehzahlproportionale Pulse des Elektromotors vom Mikroprozessor erfasst und hieraus positionsbestimmende Daten berechnet und gespeichert werden, mit folgenden Schritten:
- Neustart des Mikroprozessors nach dem Reset,
- Abfragen im Rahmen einer Plausibilitätsprüfung, ob unmittelbar vor dem Reset ermittelte, positionsbestimmende Daten noch gespeichert sind,
- im Falle dass sämtliche, unmittelbar vor Beginn des Resets erfasste, positionsbestimmende Daten noch gespeichert sind, Einlesen des Spannungsabfalls U₁ = f(t) eines mit dem Mikroprozessor verbundenen, bei Eintritt des Resets von einer vorherigen Ladespannung getrennten RC-Gliedes in den Mikroprozessor, Berechnung der Zeitdauer des Resets, Nachberechnung einer Korrekturgröße durch Auswertung der berechneten Reset-Zeitdauer und Aktualisierung der positionsbestimmenden Daten, ausgehend von den noch gespeicherten positionsbestimmenden Daten unter Verwendung der nachberechneten Korrekturgröße, und
- im Falle dass unmittelbar vor Beginn des Resets erfasste, positionsbestimmende Daten verloren gegangen sind, Durchführung einer kompletten, von einem Null-Bezugspunkt ausgehenden Neuinitialisierung.

2. Verfahren nach Anspruch 1, **dadurch gekennzeichnet, dass** die bis zum Beginn des Resets erfassten und zur Detektierung ausgewerteten drehzahlproportionale Pulse des Elektromotors in Form von Impulsdaten bekannter Bandbreite vorliegen.

3. Verfahren nach Anspruch 1 oder 2, **dadurch gekennzeichnet, dass** die Nachberechnung der Korrekturgröße unter Berücksichtigung der Stellgeschwindigkeit des Stellantriebs bei Beginn des Resets vorgenommen wird.

4. Verfahren nach Anspruch 3, **dadurch gekennzeichnet, dass** die Erfassung der Stellgeschwindigkeit durch einen für die Erfassung der Stellposition des Stellantriebs vorgesehenen inkrementalen Geber (Z;HS) erfolgt.

## Claims

1. Method for detecting information loss in a microprocessor during a reset in an actuating drive (ST) of a motor vehicle, which actuating drive is controlled by the microprocessor and has an actuating position detection means and an electric motor (M), in which speed-proportional pulses of the electric motor are detected by the microprocessor and position-determining data are calculated therefrom and are stored, having the following steps:
- the microprocessor is restarted after the reset,
- a query is carried out within the scope of a plausibility check in order to determine whether position-determining data determined immediately before the reset are still stored,
- if all position-determining data acquired immediately before the start of the reset are still stored, the voltage drop U₁=f(t) across an RC element connected to the microprocessor and separated from a previous charging voltage upon the occurrence of the reset is read into the microprocessor, the duration of the reset is calculated, a correction variable is subsequently calculated by evaluating the calculated reset duration, and the position-determining data are updated on the basis of the position-determining data which are still stored using the subsequently calculated correction variable, and
- if position-determining data acquired immediately before the start of the reset are lost, a complete reinitialization based on a zero reference point is carried out.

2. Method according to Claim 1, **characterized in that** the speed-proportional pulses of the electric motor which are detected up to the start of the reset and are evaluated for the purpose of detection are present in the form of pulse data of a known bandwidth.

3. Method according to Claim 1 or 2, **characterized in that** the correction variable is subsequently calculated taking into account the actuating speed of the actuating drive at the start of the reset.

4. Method according to Claim 3, **characterized in that** the actuating speed is detected by an incremental encoder (Z; HS) provided for the purpose of detecting the actuating position of the actuating drive.

## Revendications

1. Procédé de détection de la perte d'informations d'un microprocesseur pendant une réinitialisation d'un actionneur (ST) d'un véhicule automobile, commandé par un microprocesseur, comportant un dispositif de détection de position de réglage et un moteur électrique (M), dans lequel des impulsions proportionnelles à la vitesse de rotation du moteur électrique sont mesurées par le microprocesseur et des données définissant la position sont calculées et enregistrées à partir de ceci, comprenant les étapes suivantes :
- redémarrage du microprocesseur après la réinitialisation,
- interrogation dans le cadre d'un contrôle de vraisemblance, afin de savoir si les données définissant la position déterminées immédiatement avant la réinitialisation sont encore enregistrées,
- dans le cas où l'ensemble des données définissant la position recueilli immédiatement avant le début de la réinitialisation sont encore enregistrées, lecture de la chute de tension U₁ = f(t), d'un circuit RC, lié au microprocesseur et séparé d'une tension de charge précédente lors de la survenue de la réinitialisation dans le microprocesseur, calcul de la durée de la réinitialisation, une valeur de correction recalculée par analyse de la durée de réinitialisation calculée et actualisation des données définissant la position, à partir des données définissant la position encore enregistrées à l'aide de la valeur de correction recalculée, et
- dans le cas où les données définissant la position recueillies immédiatement avant le début de la réinitialisation sont perdues, réalisation d'une réinitialisation complète à partir d'un point zéro de référence.

2. Procédé selon la revendication 1, **caractérisé en ce que** les impulsions proportionnelles à la vitesse de rotation du moteur électrique, mesurées jusqu'au début de la réinitialisation et analysées pour la détection existent sous la forme de données d'impulsons présentant une bande passante connue.

3. Procédé selon la revendication 1 ou 2, **caractérisé en ce que** la valeur de correction est recalculée en tenant compte de la vitesse de réglage de l'actionneur au début de la réinitialisation.

4. Procédé selon la revendication 3, **caractérisé en ce que** la mesure de la vitesse de réglage a lieu à l'aide d'un détecteur incrémental (Z ; HS) prévu pour la mesure de la position de réglage de l'actionneur.
